# EUROPÄISCHE PATENTSCHRIFT

(11) **EP 1 028 536 B1**
(45) Veröffentlichungstag und Bekanntmachung des Hinweises auf die Patenterteilung: **09.04.2003**
(21) Anmeldenummer: 00100280.7
(22) Anmeldetag: 19.01.2000
(51) Int. Cl.: B60G 17/052, B60G 17/015, G08C 17/02

(54) **Drahtloses Fernbediensystem zum Fernbedienen von Funktionen in Kraftfahrzeugen**
Wireless remote control system for telecontrol of motor vehicle functions
Système de télécommande sans fil pour télécommander des fonctions d'un véhicule automobile

(30) Priorität: 09.02.1999 DE 19905172
(43) Veröffentlichungstag der Anmeldung: 16.08.2000
(73) Patentinhaber: KNORR-BREMSE Systeme für Nutzfahrzeuge GmbH, 80809 München (DE)
(72) Erfinder: Lauser, Wilfried, 71299 Wimsheim (DE); Miller, Bernhard, 70439 Stuttgart (DE)

(56) Entgegenhaltungen:
- DE-A- 3 810 386
- US-A- 4 517 564
- US-A- 5 570 284

## Beschreibung

### Stand der Technik

Die Erfindung befaßt sich mit einem drahtlosen Fernbediensystem zum Fernbedienen von Funktionen in Kraftfahrzeugen, insbesondere zur Funkfernbedienung für eine elektronisch gesteuerte Luftfederung in Nutzkraftfahrzeugen mit wenigstens einer fahrzeugseitigen Sende/Empfangseinheit und einer mit der Sende/Empfangseinheit kommunizierenden, wenigstens Fernbediensignale sendenden Fernbedieneinheit.

Derartige Fernbediensysteme sind im Stand der Technik allgemein bekannt.

Drahtlose Funkfernbediensysteme zum Fernbedienen von Funktionen im Kraftfahrzeug sind z.B. zum Aktivieren der Zentralverrieglung und ähnlichen Funktionen bei Pkws bekannt. Für die Neveauverstellung von Nutzfahrzeugen durch eine elektronische Luftfederung werden üblicherweise drahtgebundene Fernbediensysteme eingesetzt, bei denen die Verbindungen zwischen der Fernbedieneinheit und einer Empfangseinheit im Fahrzeug bisher üblicherweise durch Spiralkabel hergestellt sind.

Dabei werden die Daten über eine separate oder gemeinsame Sende/Empfangsleitung übertragen. Die Ausgabe von Fehlern erfolgt mittels einer Blinkausgabe an einer Fehlerlampe oder durch LED's, die zur Funktionsanzeige in der Fernbedienung bereits vorhanden sind. Bei Einsatz eines intelligenten Armaturenfeldes, das eine Text- oder Grafikanzeige aufweist, können Fehler im Klartext dem Fahrer mitgeteilt werden.

Des weiteren läßt sich mit Hilfe von Diagnosegeräten, die an den Diagnosestecker des Fahrzeugs angeschlossen werden, in der Werkstatt nach Aktivierung durch die Fernbedienung eine detaillierte Fehlerdiagnose verschiedener Steuergeräte im Fahrzeug ausgeben.

Die bei den genannten Fernbediensystemen zum Fernbedienen der elektronisch gesteuerten Luftfederung von Nutzkraftfahrzeugen eingesetzte Kabelverbindung macht ein Verlieren der damit verbundenen Fernbedieneinheit unmöglich. Ist im Kraftfahrzeuganhänger oder Sattelauflieger ebenfalls ein elektronisch gesteuertes Luftfedersystem mit Höhenverstellung installiert, so wird diese Verstellung mit einer zweiten Fernbedieneinheit oder wahlweise durch Umstecken der Fernbedieneinheit zwischen dem Zugfahrzeug und dem Anhänger bedient.

Bei Fahrzeuganhängern, die häufig das Zugfahrzeug wechseln, ist es notwendig, die gefahrenen Kilometer des Anhängers oder der Anhänger sowie eventuelle Fehlermeldungen anzuzeigen. Dazu werden am Fahrzeuganhänger spezielle Kilometerstandzähler bzw. auf der Rückwand desselben große Fehleranzeigen angebracht.

### Aufgaben und Vorteile der Erfindung

Damit eine optimale Bewegungsfreiheit erreicht wird, soll anstelle des bisher bekannten kabelgebundenen Fernbediensystems insbesondere zur Fernbedienung einer elektronisch gesteuerten Luftfederung in Nutzfahrzeugen ein drahtloses Fernbediensystem verwendet werden. Dieses soll so gestaltet sein, daß die Fernbedieneinheit vor dem Verlieren geschützt ist und daß der Stromverbrauch der Fernbedieneinheit minimiert werden kann.

Bei einem bevorzugten Ausführungsbeispiel sollen Maßnahmen getroffen werden, um Störungen durch die Beeinflussung von anderen Fernbediensystemen auszuschalten.

Die Fernbedienung soll sich ferner dafür eignen, wahlweise eine elektronisch gesteuerte Luftfederung in einem Zugfahrzeug oder in einem Anhänger bzw. Sattelauflieger zu bedienen.

Die oben genannte Hauptaufgabe der Erfindung, nämlich der Schutz gegen Verlieren der Fernbedieneinheit wird bei dem vorgeschlagenen drahtlosen Fernbediensystem durch eine spezielle Form einer Kommunikation, bevorzugt durch eine sporadische bidirektionale Funkverbindung zwischen der Fernbedieneinheit und einer Sende/Empfangseinheit im Fahrzeug gelöst. Die Fernbedieneinheit einerseits und die Sende/Empfangseinheit im Fahrzeug andererseits enthalten Verlustschutzmittel, die bei einer Unterbrechung der Funkverbindung, die z. B. durch ein versehentliches Liegenlassen der Fernbedieneinheit außerhalb des Fahrzeugs bewirkt wird, der Sende/Empfangseinheit im Fahrzeug eine Meldung machen, so daß diese durch Anzeigemittel den Verlust der Fernbedieneinheit bei Fahrtbeginn anzeigen kann. Dabei wird davon ausgegangen, daß spätestens vor dem Losfahren die Fernbedieneinheit in einen Aufbewahrungshalter im Zugfahrzeug zurückgebracht wurde. Durch das Einstecken der Fernbedieneinheit in den Aufbewahrungshalter meldet sich die Fernbedieneinheit ein letztes Mal bei der Sende/Empfangseinheit im Zugfahrzeug und stellt dann die sporadische Verbindung zur Sende/-Empfangseinheit im Fahrzeug ein. Ist dies bis zum Fahrzeugstart nicht erfolgt, so erscheint eine Fehleranzeige an den Anzeigemitteln der Sende/Empfangseinheit.

Weiterhin läßt sich der Stromverbrauch der Fernbedieneinheit minimieren, indem diese nach dem Einstecken in dem Aufbewahrungshalter abgeschaltet wird. Dies kann durch einen in der Fernbedieneinheit integrierten Magnetsensor oder Reedkontakt erfolgen, wobei der Aufbewahrungshalter einen Permanentmagneten enthält, auf den der Sensor in der Fernbedieneinheit beim Einstecken in den Aufbewahrungshalter anspricht. Erkennt der Sensor in der Fernbedieneinheit diesen Dauermagneten, so meldet sich die Fernbedieneinheit bei der Sende/Empfangseinheit ab und schaltet sich aus. Solange sich die Fernbedieneinheit im aktiven Zustand befindet, wird der Magnetsensor oder Schalter von der Fernbedieneinheit sporadisch abgefragt.

Nach erneuter Entnahme der Fernbedieneinheit aus dem Aufbewahrungshalter schaltet sich die Fernbedieneinheit selbsttätig ein und meldet sich beim Fahrzeug-Steuergerät an. Alternativ dazu kann die Fernbedieneinheit, z.B. durch Drücken einer Fernbedientaste wieder aktiviert werden und die sporadische bidirektionale Kommunikation beginnt von neuem.

Damit die Funkverbindung zwischen der Fernbedieneinheit und der Sende/Empfangseinheit bzw. den Sende/Empfangseinheiten in einem Zugfahrzeug und gegebenenfalls in dessen Anhänger oder Sattelauflieger nicht durch andere Störsignale gestört werden kann, läßt sich die uni- oder bidirektionale Verbindung zum Austausch von Schlüsselcodes verwenden. Auf diese Weise kann mit Hilfe der Verbindung von der Sende/Empfangseinheit zur Fernbedieneinheit eine Softwareverschlüsselung vorgenommen werden. Um eine sichere Kommunikation zwischen der Fahrzeugsende/Empfangseinheit und der Fernbedieneinheit zu gewährleisten, können gegenseitig gerätespezifische Seriennummern während jeder Übertragung abgefragt und kontrolliert werden. Auf diese Weise läßt sich ein kostengünstiger Empfänger verwenden, so daß sich die Mehrkosten der bidirektionalen Sende/-Empfangseinheit relativieren. Es kann jedoch auch nur eine Fernbedieneinheit mit Sendeteil ihre Seriennummer als Code senden.

Bei dieser durch den Austausch von einander zugeordneten Schlüsselcodes bewirkten Paarung werden in der Fernbedieneinheit die Seriennummern der Sende/Empfangseinheit im Zugfahrzeug und gegebenenfalls im Anhänger bzw. im Sattelauflieger gespeichert. Die Seriennummer der Fernbedienung wird in der jeweiligen Fahrzeugsende/-Empfangseinheit, d. h. im Zugfahrzeug und gegebenenfalls im Anhänger bzw. Sattelauflieger gespeichert. Das erfindungsgemäße Fernbediensystem kann so eingerichtet sein, daß die Sende/Empfangseinheit des Zugfahrzeugs nach Fahrzeugstart automatisch den Schlüsselcode der Fernbedieneinheit an die Sende/Empfangseinheit des Anhängers bzw. Sattelaufliegers weitergibt und somit eine automatische Paarung zwischen der Fernbedieneinheit und der Sende/Empfangseinheit des Anhängers bzw. Sattelaufliegers vornimmt. Eine Bereitschaft für eine Neupaarung der Schlüsselcodes zwischen Fernbedieneinheit und der jeweiligen Sende/Empfangseinheit kann dadurch vorgenommen werden, daß sich an der Sende/Empfangseinheit des Zugfahrzeugs und der des Anhängers bzw. Sattelaufliegers ein Zeitfensters öffnet, in welchem die Sende/Empfangseinheit des Steuergeräts bereit ist, für eine Neupaarung der Schlüsselcodes. Weiterhin kann bei einem gleichzeitigen Paarungsversuch von zwei zeitgleich startenden Lastkraftwagen die Sende/Empfangseinheit des Anhängers bzw. Sattelaufliegers die Neupaarung ablehnen und gegebenenfalls die Paarungsparameter ganz löschen und eine Fehlermeldung abgeben. Wenn in der Sende/Empfangseinheit des Anhängers bzw. Sattelaufliegers ein doppelter Paarungsversuch an die Sende/Empfangseinheit des Zugfahrzeugs gemeldet wird, kann daraufhin die Paarung der Schlüsselcodes erneut vesucht werden. Jede Sende/Empfangseinheit akzeptiert nur ihre und damit auch nur eine Fernbedieneinheit. Bei häufigem Wechsel von Zugfahrzeug und Anhänger ist es wichtig, daß eine einfache Änderung der Paarung von Fernbedieneinheit und Sende/Empfangseinheit des Anhängers bzw. Sattelaufliegers vorgenommen werden kann. Dies kann dadurch erfolgen, indem gleichzeitig mit dem Drücken einer bestimmten Fernbedientaste oder Tastenkombination an der Fernbedieneinheit auch fahrzeugseitig ein Schaltvorgang erfolgt. Dafür läßt sich z. B. die Bremslichtinformation heranziehen, da diese vom Zugfahrzeug ausgelöst wird und sowohl im Zugfahrzeug als auch im Anhänger bzw. Sattelauflieger vorliegt.

Nachstehend wird das erfindungsgemäße drahtlose Fernbediensystem in Ausführungsbeispielen anhand der Zeichnung näher beschrieben. Die Zeichnungsfiguren zeigen im einzelnen:
- Figur 1: ein Blockschaltbild einer drahtlosen Fernbedieneinheit mit einem Verlierschutz gegen Verlust derselben;
- Figur 2: eine auf der Fahrzeugseite befindliche Sende/Empfangseinheit, und
- Figur 3: ebenfalls eine fahrzeugseitige Sende/-Empfangseinheit jedoch mit einem eigenen Rechner und einem zusätzlichen Eingang zur Durchführung einer Sender/Empfängerpaarung.

### Ausführungsbeispiele

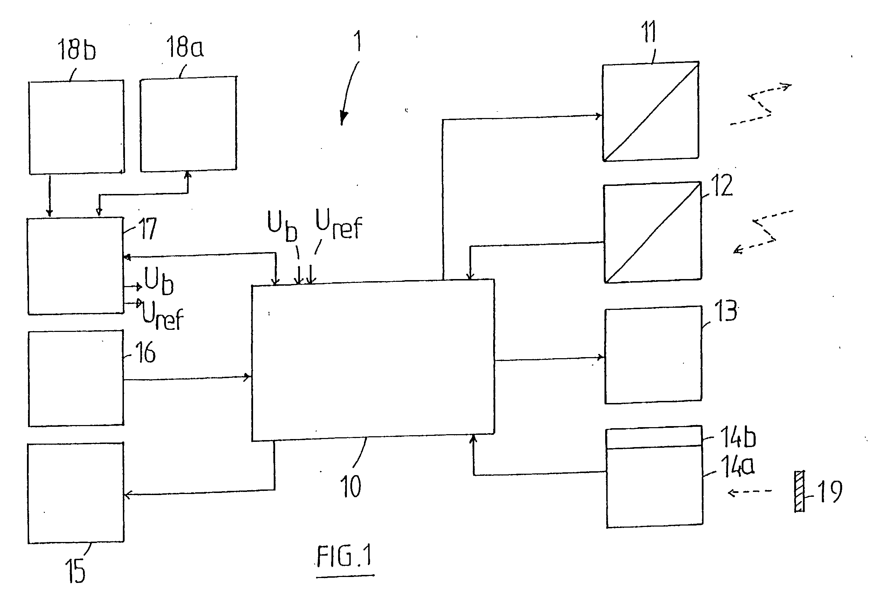

Das in Figur 1 gezeigte Blockschaltbild einer erfindungsgemäßen Ausführungsform einer für das vorgeschlagene drahtlose Fernbediensystem verwendbaren Fernbedieneinheit 1 weist einen bevorzugt als Mikroprozessor ausgeführten Prozessor 10 mit einem Flashspeicher und einem EEPROM sowie einer Unterspannungserkennung auf. Mit dem Prozessor 10 sind ein Sendemodul 11, ein Empfangsmodul 12, eine Status- und Fehleranzeige 13, die LED's oder ein LCD-Display aufweist, ein Magnetfeldsensor (oder Reedschalter) 14a sowie ein akustischer Signalträger 14b verbunden. Der Magnetfeldsensor 14a oder Reedschalter dient erfindungsgemäß dazu, die korrekte Aufbewahrung der Fernbedieneinheit 1 in dem (in Figur 1 nicht gezeigten) Aufbewahrungshalter im Zugfahrzeug festzustellen. Von dem Aufbewahrungshalter ist lediglich der darin sitzende Dauermagnet 19 gezeigt. Das Sendemodul und das Empfangsmodul 12 können jeweils auf zwei möglichen Sendeund Empfangsfrequenzen senden und empfangen, z. B. auf 433 und 866 MHz.

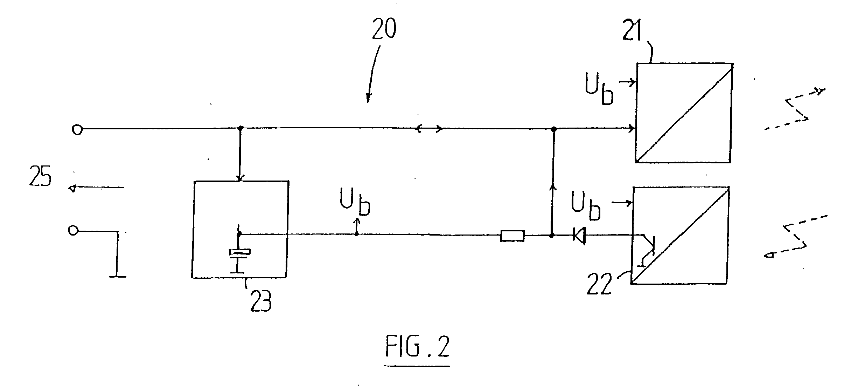

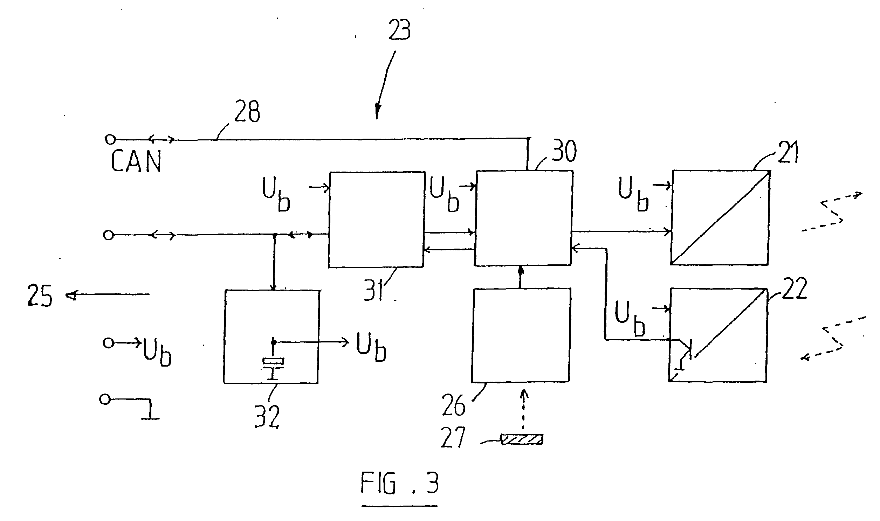

Bei einer Unterbrechung der Funkverbindung, z. B. durch versehentliches Liegenlassen der Fernbedieneinheit außerhalb des Fahrzeugs meldet das mit der Sende/-Empfangseinheit im Zugfahrzeug verbundene Steuergerät 25 (Figur 2 und 3) für die elektronische Luftfederung über eine Fehlerlampe den Verlust bei Fahrtbeginn. Dabei wird davon ausgegangen, daß spätestens vor dem Losfahren die Fernbedieneinheit in den (nicht gezeigten) Aufbewahrungshalter zurückgebracht wurde, so daß der Magnetfeldsensor 14a den Dauermagneten 19 erfassen kann. Durch dieses Einstecken der Fernbedieneinheit 1 in den Aufbewahrungshalter meldet sich die Fernbedieneinheit ein letztes Mal bei der Sende/Empfangseinheit im Zugfahrzeug und stellt dann die sporadische Verbindung zu derselben ein. Ist die letzte Meldung der Fernbedieneinheit 1 bis zum Fahrzeugstart nicht erfolgt, erscheint eine Fehleranzeige an der Fehlerlampe des Steuergeräts 25 im Zugfahrzeug.

Weiterhin ist mit dem Mikroprozessor 10 der Fernbedieneinheit 1 ein akustischer Signalgeber 15 verbunden, mit dem z. B. Fehlbedienungen signalisiert werden können. Eine Tastatur 16 dient zur Eingabe von Fernbedienbefehlen. Die Fernbedieneinheit 1 aktiviert sich per Reedschalter automatisch während des Herausnehmens aus dem Aufbewahrungshalter, so daß die sporadische bidirektionale Kommunikation von neuem beginnt. Ferner ist eine Energieversorgungseinheit 17 vorgesehen, die die Funktion des Abschaltens der im Aufbewahrungshalter befindlichen Fernbedieneinheit kurz nach dem Einstecken und dadurch die Abschaltung ihres Stromverbrauchs bewirkt. Die Energieversorgungseinheit 17 ist mit einer Batterie oder einem Akkumulator 18a und gegebenenfalls auch mit einer Solarzelle 18b verbunden, die die nicht durch einen Speiseleitung mit dem Fahrzeug verbundene Fernbedieneinheit 1 mit Energie versorgen.

Die in Figur 2 blockschaltbildartig gezeigte Sende/-Empfangseinheit, die allgemein mit der Bezugszahl 20 bezeichnet ist, befindet sich auf der Fahrzeugseite, d.h. im Zugfahrzeug und gegebenenfalls auch im Anhänger bzw. Sattelauflieger, wenn letztere über fernbedienbare Funktionen, d.h. insbesondere über eine elektronisch gesteuerte Luftfederung mit der Möglichkeit der Niveauverstellung verfügen. Ein Sendemodul 21 und ein Empfangsmodul 22 sind für die bidirektionale Kommunikation mit der in Figur 1 gezeigten Fernbedieneinheit 1 eingerichtet, haben also jeweils dieselbe Sende- und Empfangsfrequenz, wie die Fernbedieneinheit 1. Wie gezeigt, ist die Sende/Empfangseinheit 20 mit einem fahrzeugseitigen Steuergerät 25 verbunden, das wenigstens die von der Fernbedieneinheit 1 fernbedienbaren Funktionen, insbesondere der elektronischen Luftfederung ausführt.

Die erfindungsgemäß vorgesehene uni- oder bidirektionale Verbindung kann auf verschiedene Weise genutzt werden. Zum einen läßt sich mit Hilfe der Verbindung vom Steuergerät 25 über die Sende/Empfangseinheit 20 zur Fernbedieneinheit 1 eine Softwareverschlüsselung vornehmen. Um eine sichere Kommunikation zwischen dem Fahrzeugsteuergerät 25 und der Fernbedieneinheit zu gewährleisten, können die Seriennummern der Geräte und der Fernbedieneinheit während jeder Übertragung abgefragt und kontrolliert werden. Dadurch ist es möglich, einen kostengünstigen Empfängertyp zu verwenden.

Durch diese Paarung werden im Falle der bidirektionalen Übertragung in der Fernbedieneinheit 1 die Seriennummern vom Zugfahrzeug-Steuergerät 25 und gegebenenfalls von dem des Anhängers bzw. Sattelaufliegers gespeichert. Die Seriennummer der Fernbedieneinheit 1 wird im jeweiligen Fahrzeugsreuergerät 25 gespeichert. Dadurch wird ermöglicht, daß die Fernbedieneinheit und das Steuergerät 25 im Fahrzeug sich kennen und durch keine fremden Fahrzeuge oder Fernbedienungen beeinflußt werden können. Jedes Steuergerät 25 akzeptiert nur seine und damit auch nur eine Fernbedieneinheit.

Wenn das Fahrzeug und der Anhänger häufig gewechselt werden müssen, ist es wichtig, daß eine einfache Änderung der Paarung der Fernbedieneinheit und der Sende/Empfangseinheit des Sattelaufliegers bzw. Anhängers vorgenommen werden kann. Dies kann z. B. dadurch erfolgen, indem gleichzeitig zum Drücken einer bestimmten Fernbedientaste oder Tastenkombination an der Fernbedieneinheit auch fahrzeugseitig ein Schaltvorgang erfolgt.

Z. B. läßt sich für diesen Zweck die Bremslichtinformation heranziehen, da diese vom Zugfahrzeug ausgelöst wird und sowohl im Zugfahrzeug als auch im Anhänger bzw. Sattelauflieger vorliegt. Eine Prozedur zur Umprogrammierung der Paarung der Schlüsselcodes könnte dann wie folgt ablaufen:
1. Die Zündung des Fahrzeugs wird eingeschaltet;
2. Auf der Fernbedieneinheit 1 wird die Fahrzeugauswahl vorgenommen (Zugfahrzeug oder Anhänger/Sattelauflieger), und
3. Die entsprechende Taste oder Tastenkombination an der Fernbedieneinheit 1 wird gedrückt und währenddessen die Fahrzeugbremse betätigt.

Das in Figur 3 gezeigte Blockschaltbild zeigt eine alternative fahrzeugseitige Sende/Empfangseinheit 23, die über einen eigenen Prozessor 30 mit Flashspeicher und EEPROM verfügt. Die Schaltinformation für das Umprogrammieren der Paarung der Schlüsselcodes kann auch in Form eines Tasters, oder, wie in Figur 3 dargestellt, durch einen Magnetfeldsensor 26 erfolgen, der in der Sende/-Empfangseinheit 23 auf der Fahrzeugseite integriert ist. Der Magnetfeldsensor 26 kann durch einen starken Dauermagneten 27 der Fernbedieneinheit betätigt werden, wenn ein solcher starker Dauermagnet an der Unterseite einer Fernbedieneinheit gegebenenfalls in Form eines komfortablen Halters desselben bereits vorhanden ist. Ein Magnetfeldsensor oder Reedschalter ist in verschmutzter oder rauher Umgebung häufig eine zu bevorzugende und kostengünstige Alternative zu einem Taster. Dieser Magnetfeldsensor 26 kann, wie Figur 3 zeigt, auf der fahrzeugseitigen SendeSende/Empfangseinheit 23 mit integriert sein.

Die in Figur 3 dargestellte Sende/Empfangseinheit 23 kann eine drahtgebundene Fernbedieneinheit, wenn die Emfpangseinheit modifiziert ist, ersetzen. Ausgangsseitig kann eine fahrzeugseitige Sende/Empfangseinheit 23, wie sie in Figur 3 dargestellt ist, mittels eines bidirektionalen Sende/Empfangsmoduls 31 auch direkt auf eine Diagnose- oder CAN-Leitung 28 im Fahrzeug gehen. Der in der in Figur 3 dargestellten Ausführungsform der Sende/Empfangseinheit 23 enthaltene Rechner 30 übernimmt dabei die sichere Verschlüsselung der Funkübertragung, wohingegen externe Geräte, z. B. Diagnosegeräte als einfache CAN-Botschaft gesehen werden. Mit der Bezugszahl 32 ist eine Stromversorgungseinheit bezeichnet.

Falls die Fernbedieneinheit 1 mit einer Anzeigeeinheit 13 ausgestattet ist, kann die zur Fernbedieneinheit 1 führende Sendestrecke genutzt werden, um eine Fehlerausgabe des an der Sende/Empfangseinheit 20 oder 23 angeschlossenen Steuergeräts 25 durchzuführen. Dies ist dann vorteilhaft und von Interesse, wenn sich im Fahrzeugarmaturenbrett noch keine entsprechende Anzeigeeinheit befindet.

Das oben beschriebene und in den Figuren 1 bis 3 dargestellte Fernbediensystem ermöglicht mit einer bidirektionalen fahrzeugseitigen Kommunikation LED's oder ein LCD-Display noch eine weitere Nutzung dieser Verbindung, nämlich eine bidirektionale Übertragung von Daten zwischen beliebigen Fahrzeugsteuergeräten und externen Geräten bzw. Anlagen außerhalb des Fahrzeugs.

So kann z. B. ein Mietanhänger bei der Einfahrt in die Spedition die gefahrenen Kilometer, einen Systemfehler oder evtl. anstehende Wartungsarbeiten drahtlos an eine Werkstatt oder Verwaltung der Spedition zusammen mit verschiedenen Fahrzeugdaten übertragen. Die Kommunikation kann dabei so ablaufen, daß bei der Toreinfahrt ein Sender einen spezifischen Identifikationscode aussendet und darauf das vorbeifahrende Fahrzeug seine Zulassungsnummer und die angeforderten Daten zurücksendet. Außerdem können (durch einen entsprechenden Identifikationscode geschützt) die im Fahrzeugsteuergerät gespeicherten Informationen über Fahrzeughalter, -mieter, -fracht usw. mit ausgegeben werden. Daten, die vom Büro der Spedition ins Fahrzeug gelangen sollen, werden bei der nächsten Torpassage ins Fahrzeug zurückübertragen. Nach einmalig eingegebener Serien-Steuergerätenummer im Computer der Spedition kann eine Zuordnung zwischen Steuergeräte-Seriennummer und Fahrzeugzulassungsnummer hergestellt werden. Ab diesem Zeitpunkt genügt die Fahrzeugzulassungsnummer als Identifizierungsmerkmal.

Über die bidirektionale Funkverbindung des erfindungsgemäßen Fernbediensystems ist auch eine Diagnosereizung möglich. Nach erfolgtem Anreiz werden die Informationen der Diagnoseleitung über die Fernbedieneinheit per Funk weitergeleitet, und somit kann die komplette Diagnose über die Funkverbindung abgewickelt werden. Damit lassen sich die Kosten eines Diagnosesteckers einsparen. So können dann bereits bei Einfahrt eines Nutzkraftwagens in die Werkstatt die Fehlerspeicher aller Steuergeräte sowie Fahrzeugdaten ausgelesen und dann z. B. in der Werkstatt die notwendigen Arbeiten veranlasst sowie die dazu benötigten Ersatzteile automatisch ausgegeben werden.

Außerdem ist es z. B. möglich, Informationen über das Fahrzeuggewicht, die die elektronisch gesteuerte Luftfederung über CAN aus den Achslastsensoren des elektronischen Bremssystems erhält, über die Funkverbindung des erfindungsgemäßen drahtlosen Fernbediensystems an autark arbeitende Anzeigegeräte zu übermitteln. Eine solche Information über das jeweilige Gesamt- bzw. Zuladegewicht (auch auf einzelne Achsen bezogen) könnte an Laderampen, am Armaturenbrett von Gabelstaplern, Baggern oder Radladern auf Baustellen usw. von Interesse sein.

Ein solches Meßgerät kann zur Findung des gewünschten Fahrzeugs ähnlich wie bei der Fernbedienung oder Werkstattdiagnose eine Art Identifikationscode aussenden und bekommt die entsprechenden gewünschten Daten zurückgefunkt. Antworten mehrere Empfänger auf den ausgesendeten Identifikationscode, so kann durch Ja/Nein-Quittierung die Auswahl des gewünschten Fahrzeugs vorgenommen werden, wobei auf einem Display die Kraftfahrzeugnummer jeweils eines der antwortenden Fahrzeuge angezeigt wird.

Eine Paarung der Schlüsselcodes zwischen einem Fahrzeug und der Fernbedienung soll wegen einem evt. häufigen Wechsel des Anhängers oder Sattelaufliegers auf einfache Art umprogrammierbar sein. Auf Wunsch kann eine feste, nur durch eine Geheimzahl oder über die Werkstatt änderbare Paarung zwischen Fahrzeug und Fernbedieneiheit vorgenommen werden. Besitzt der Mikroprozessor 10 der Fernbedieneinheit 1 einen programmierbaren Flashspeicher, so kann diese Programmierung auch während der Fahrzeugendmontage durchgeführt werden. Dadurch kann die Fernbedieneinheit 1 nur zusammen mit dem Fahrzeug betrieben werden. Wird dies kennbar gemacht, so reduziert sich die Diebstahlgefahr für die Fernbedieneinheit erheblich.

Es ist zu bemerken, daß grundsätzlich alle beschriebenen Funktionen des erfindungsgemäßen Fernbediensystems auch ohne eine in der Fernbedieneinheit 1 enthaltene LCD-Anzeigeeinheit ausführbar sind.

Bei Verzicht auf die Fernbedienung einer Diagnose- und Fehlerausgabe genügt auf der Fahrzeugseite eine reine Empfangseinheit.

Um eine vorhandene Paarung einer Fernbedieneinheit mit einem Mietanhänger wieder zu löschen, kann nach Eingabe der Fahrzeugselektion mittels einer anderen Taste (Tastenkombination) die Paarung wieder aufgehoben werden. Besitzt das Zugfahrzeug eine Sende/Empfangseinheit, so kann nach jedem Neustart des Zugfahrzeugs eine neue automatische bidirektionale Paarung vorgenommen werden. Dabei übernimmt das Zugfahrzeug automatisch die Rolle der oben beschriebenen Paarung der Schlüsselcodes zwischen der Fernbedieneinheit und dem Fahrzeug, so daß ein Wechsel des Anhängers oder Sattelaufliegers automatisch an die Fernbedieneinheit des Zugfahrzeugs übertragen wird. Die Paarung für den Anhänger bzw. Sattelauflieger kann nach jedem Ausschalten gelöscht werden.

## Patentansprüche

1. Drahtloses Fernbediensystem zum Fernbedienen von Funktionen in Kraftfahrzeugen, insbesondere zur Funkfernbedienung für eine elektronisch gesteuerte Luftfederung in Nutzkraftfahrzeugen, mit wenigstens einer fahrzeugseitigen Sende/Empfangseinheit (20;23) und einer mit der Sende/Empfangseinheit kommunizierenden, wenigstens Fernbediensignale sendenden Fernbedieneinheit (1), **dadurch gekennzeichnet, daß** das Fernbediensystem Übertragungsmittel (21, 22) zur Kommunikation zwischen der Fernbedieneinheit (1) und der (den) Sende/Empfangseinheit(en) (20;23) im Betrieb der Fernbedieneinheit (1) aufweist, daß die Fernbedieneinheit (1) und die wenigstens eine Sende/Empfangseinheit Verlustschutzmittel (14, 19) aufweisen, die eine Unterbrechung der Kommunikation zwischen der (den) Fernbedieneinheit(en) (1) und der Sende/Empfangseinheit (20; 23) erkennen und daß der (den) Sende/Empfangseinheit(en) (20; 23) Anzeigemittel (25) zugeordnet sind, die bei einer erkannten Unterbrechung der Kommunikation zwischen der Fernbedieneinheit (1) und der wenigstens einen Sende/Empfangseinheit (20; 23) zumindest bei Fahrtbeginn den Verlust der Fernbedieneinheit anzeigen.

2. Fernbediensystem nach Anspruch 1, **dadurch gekennzeichnet, daß** die Übertragungsmittel zur bidirektionalen Kommunikation zwischen der Fernbedieneinheit (1) und der bzw. den Sende/Empfangseinheiten(en) (20; 23) eingerichtet sind.

3. Fernbediensystem nach Anspruch 1 oder 2, **dadurch gekennzeichnet, daß** die Kommunikation durch eine Funkverbindung zwischen der Fernbedieneinheit (1) und der Sende/Empfangseinheit (20; 23) sporadisch ausgeführt wird.

4. Fernbediensystem nach einem der Ansprüche 1 bis 3, **dadurch gekennzeichnet, daß** im Zugfahrzeug ein Aufbewahrungshalter zum Aufbewahren der Fernbedieneinheit (1) vorgesehen ist, und daß die Fernbedieneinheit (1) einen Sensor (14) aufweist, der elektronisch die korrekte Aufbewahrung der Fernbedieneinheit (1) im Aufbewahrungshalter erkennt.

5. Fernbediensystem nach einem der Ansprüche 1 bis 4, **dadurch gekennzeichnet, daß** die Fernbedieneinheit so eingerichtet ist, daß sie, wenn der Sensor (14) die korrekte Aufbewahrung der Fernbedieneinheit (1) in dem Aufbewahrungshalter vor Fahrtbeginn erkannt hat, eine letzte Korrektmeldung zur Sende/Empfangseinheit des Zugfahrzeugs sendet und dann die Verbindung zu dieser Sende/Empfangseinheit unterbricht.

6. Fernbediensystem nach Anspruch 5, **dadurch gekennzeichnet, daß** die Sende/Empfangseinheit (20; 23) des Zugfahrzeugs dazu eingerichtet ist, eine Fehler- bzw. Verlustanzeige an den Anzeigemitteln (25) zu erzeugen, wenn die letzte Korrektmeldung des Fernbediengeräts (1) bei Fahrtbeginn ausbleibt.

7. Fernbediensystem nach Anspruch 5 oder 6, **dadurch gekennzeichnet, daß** die Fernbedieneinheit (1) Abschaltmittel (17) aufweist, die ihre Stromversorgung nach dem Absenden der letzten Korrektmeldung abschalten.

8. Fernbediensystem nach einem der Ansprüche 4 bis 7, **dadurch gekennzeichnet, daß** der Aufbewahrungshalter einen Dauermagneten (19) und der Sensor der Fernbedieneinheit (1) einen Magnetsensor (14) oder Magnetschalter aufweisen, der den Dauermagneten (19) beim Einstecken der Fernbedieneinheit (1) in den Aufbewahrungshalter erkennt und in der Fernbedieneinheit (1) ein entsprechendes Erkennungssignal erzeugt.

9. Fernbediensystem nach Anspruch 8, **dadurch gekennzeichnet, daß** die Fernbedieneinheit (1) den Magnetsensor (14), so lange sie sich im aktiven Zustand befindet, sporadisch abfragt.

10. Fernbediensystem nach Anspruch 8 oder 9, **dadurch gekennzeichnet, daß** sich der Magnetsensor (14) nach der Erkennung des Dauermagneten (19) und der Erzeugung des Erkennungssignals automatisch abschaltet.

11. Fernbediensystem nach einem der Ansprüche 4 bis 10, **dadurch gekennzeichnet, daß** die Fernbedieneinheit (1) Aktivierungsmittel aufweist, die die Fernbedieneinheit (1) nach ihrer Entnahme aus dem Aufbewahrungshalter aktivieren.

12. Fernbediensystem nach Anspruch 11, **dadurch gekennzeichnet, daß** die Aktivierungsmittel eine Taste oder einen Reedkontakt an der Fernbedieneinheit (1) aufweisen, die bzw. der nach der Entnahme der Fernbedieneinheit (1) aus dem Aufbewahrungshalter zur Aktivierung der Fernbedieneinheit (1) zu betätigen ist oder selbsttätig auslöst.

13. Fernbediensystem nach einem der Ansprüche 1 bis 12, **dadurch gekennzeichnet, daß** das Zugfahrzeug eine erste Sende/Empfangseinheit und ein davon gezogener Anhänger oder Sattelauflieger eine zweite Sende/Empfangseinheit aufweisen.

14. Fernbediensystem nach einem der Ansprüche 2 bis 13, **dadurch gekennzeichnet, daß** die Fernbedieneinheit und jede Sende/Empfangseinheit des Zugfahrzeugs und des Anhängers bzw. Sattelaufliegers weiterhin zum bidirektionalen Austausch von gerätespezifischen Schlüsselcodes eingerichtet sind.

15. Fernbediensystem nach Anspruch 14, **dadurch gekennzeichnet, daß** die Schlüsselcodes wenigstens die Seriennummer der Fernbedieneinheit (1) beinhalten.

16. Fernbediensystem nach Anspruch 14 oder 15, **dadurch gekennzeichnet, daß** die Schlüsselcodes auch eine Seriennummer einer Sende/Empfangseinheit des von dem Zugfahrzeug gezogenen Anhängers oder Sattelaufliegers beinhalten.

17. Fernbediensystem nach einem der Ansprüche 12 bis 16, **dadurch gekennzeichnet, daß** die Schlüsselcodes der Fernbedieneinheit (1), und gegebenenfalls des Zugfahrzeugs sowie des Anhängers bzw. Sattelaufliegers einander so zugeordnet sind, daß die Fernbedieneinheit (1) und die Sendeempfangseinheiten des Zugfahrzeugs und des gezogenen Anhängers bzw. Sattelaufliegers durch keine fremden Fahrzeuge bzw. Fernbedienungen beeinflußt werden können.

18. Fernbediensystem nach einem der Ansprüche 12 bis 17, **dadurch gekennzeichnet, daß** es zur Änderung der Zuordnung der Schlüsselcodes der Fernbedieneinheit (1), der Sendeempfangseinheit des Zugfahrzeugs und der eines davon gezogenen Anhängers bzw. Sattelaufliegers eingerichtet ist.

19. Fernbediensystem nach einem der Ansprüche 14 bis 17, **dadurch gekennzeichnet, daß** die Sende/Empfangseinheit des Zugfahrzeugs nach Fahrzeugstart automatisch den Schlüsselcode der Fernbedieneinheit an die Sende/Empfangseinheit des Anhängers bzw. Sattelaufliegers weitergibt und somit eine automatische Paarung zwischen der Fernbedieneinheit (1) und der Sende/Empfangseinheit des Anhängers bzw. Des Sattelaufliegers herstellt.

20. Fernbediensystem nach Anspruch 19, **dadurch gekennzeichnet, daß** sich an der Sende/Empfangseinheit des Zugfahrzeugs und des Hängers ein Zeitfenster öffnet, in welchem die Sende/Empfangseinheit des Anhängers bereit ist für eine neue Paarung zwischen der Fernbedieneinheit und der Sende/Empfangseinheit des Anhängers bzw. Sattelaufliegers.

21. Fernbediensystem nach Anspruch 19 oder 20, **dadurch gekennzeichnet, daß** die Sende/Empfangseinheit des Anhängers bzw. Sattelaufliegers bei einem gleichzeitigen Paarungsversuch der Schlüsselcodes zweier Zugfahrzeuge, die Neupaarung ablehnt und nach Löschung der Paarungsparameter eine Fehlermeldung abgibt.

22. Fernbediensystem nach Anspruch 19 oder 20, **dadurch gekennzeichnet, daß**, wenn im Anhänger bzw. Sattelauflieger eine eigene Sende/Empfangseinheit vorhanden ist, letztere den doppelten Paarungsversuch der beiden Zugfahrzeuge an die Sende/Empfangseinheit des Zugfahrzeugs meldet und daraufhin die Paarung wiederholt versucht wird.

## Claims

1. Wireless remote control system for telecontrol of motor vehicle functions, particularly for telecontrol by radio for an electronically controlled air suspension system in commercial motor vehicles, comprising at least one transmitter/receiver unit (20; 23) on the vehicle side and a telecontrol unit (1) communicating with said transmitter/receiver unit and emitting at least remote control signals, **characterised in that** the remote control system comprises transmission means (21, 22) for communication between said telecontrol unit (1) and said transmitter/receiver unit(s) (20; 23) in operation of said telecontrol unit (1), that said telecontrol unit (1) and said at least one transmitter/receiver unit comprise anti-loss means (14, 19) that detect a split in the communication between said telecontrol unit(s) (1) and said transmitter/receiver unit (20; 23), and that display means (25) are associated with said transmitter/receiver unit(s) (20; 23), which display the loss of said telecontrol unit at least when the vehicle begins to run, when a split has been detected in the communication between said telecontrol unit (1) and said at least one transmitter/receiver unit (20, 23).

2. Remote control system according to Claim 1, **characterised in that** said transmission means are designed for bidirectional communication between said telecontrol unit (1) and said transmitter/receiver unit(s) (20; 23).

3. Remote control system according to Claim 1 or 2, **characterised in that** the communication is sporadically performed via a radio communication contact between said telecontrol unit (1) and said transmitter/receiver unit (20; 23).

4. Remote control system according to any of the Claims 1 to 3, **characterised in that** a storage receptacle is provided in the tractor vehicle for storing said telecontrol unit (1) and that said telecontrol unit (1) comprises a sensor (14) that detects, by electronic means, the correct storage of said telecontrol unit (1) in said storage receptacle.

5. Remote control system according to any of the Claims 1 to 4, **characterised in that** said telecontrol unit is so designed that it emits a last correction message to said transmitter/receiver unit of the tractor vehicle and then interrupts the communication with said transmitter/receiver unit when said sensor (14) has detected the correct storage of said telecontrol unit (1) in said storage receptacle before the vehicle begins to run.

6. Remote control system according to Claim 5, **characterised in that** said transmitter/receiver unit (20; 23) of the tractor vehicle is designed for generating an error or loss message on said display means (25) when there is no last correction message from said telecontrol unit (1) when the vehicle begins to run.

7. Remote control system according to Claim 5 or 6, **characterised in that** said telecontrol unit (1) comprises switch-off means (17) that switch off their power supply after emission of said last correction message.

8. Remote control system according to any of the Claims 4 to 7, **characterised in that** said storage receptacle comprises a permanent magnet (19) and said sensor in said telecontrol unit (1) comprises a magnetic sensor (14) or magnetic switch that identifies said permanent magnet (19) when said telecontrol unit (1) is placed into said storage receptacle and then generates a corresponding identification signal.

9. Remote control system according to Claim 8, **characterised in that** said telecontrol unit (1) sporadically interrogates said magnetic sensor (14) as long as it is in the active state.

10. Remote control system according to Claim 8 or 9, **characterised in that** said magnetic sensor (14) switches off automatically after the identification of said permanent magnet (19) and after generation of said identification signal.

11. Remote control system according to any of the Claims 4 to 10, **characterised in that** said telecontrol unit (1) comprises activation means for activating said telecontrol unit (1) after its removal from said storage receptacle.

12. Remote control system according to Claim 11, **characterised in that** said activation means comprise a key or a reed contact on said telecontrol unit (1), which, upon removal of said telecontrol unit (1) from said storage receptacle, must be operated or triggers automatically for activating said telecontrol unit (1).

13. Remote control system according to any of the Claims 1 to 12, **characterised in that** the tractor vehicle comprises a first transmitter/receiver unit and a trailer or semi-trailer towed by it comprises a second transmitter/receiver unit.

14. Remote control system according to any of the Claims 2 to 13, **characterised in that** said telecontrol unit and each transmitter/receiver unit of the tractor vehicle and the trailer or semi-trailer, respectively, are moreover designed for bidirectional exchange of equipment-specific key codes.

15. Remote control system according to Claim 14, **characterised in that** said key codes include at least the serial number of said telecontrol unit (1).

16. Remote control system according to Claim 14 or 15, **characterised in that** said key codes include also a serial number of a transmitter/receiver unit of the trailer or semi-trailer towed by the tractor vehicle.

17. Remote control system according to any of the Claims 12 to 16,
**characterised in that** said key codes of said telecontrol unit (1), and possibly of the tractor vehicle as well as of the trailer or semi-trailer, respectively, are so associated with each other that said telecontrol unfit (1) and said transmitter/receiver units of the tractor vehicle and of the towed trailer or semi-trailer, respectively, cannot be influenced by any outside vehicles or remote control systems, respectively.

18. Remote control system according to any of the Claims 12 to 17, **characterised in that** it is designed for modification of the association of said key codes of said telecontrol unit (1), said transmitter/receiver unit of the tractor vehicle and of a trailer or semi-trailer towed by the tractor.

19. Remote control system according to any of the Claims 14 to 17, **characterised in that** upon start of the vehicle, said transmitter/receiver unit of the tractor vehicle automatically transfers the key code from said telecontrol unit to said transmitter/receiver unit of the trailer or semi-trailer, respectively, thus establishing an automatic mating between said telecontrol unit (1) and said transmitter/receiver unit of the trailer or the semi-trailer, respectively.

20. Remote control system according to Claim 19, **characterised in that** a time window opens in said transmitter/receiver unit of the tractor vehicle and the trailer, within which said transmitter/receiver unit of the trailer is ready for a new operation of mating between said telecontrol unit and said transmitter/receiver unit of the trailer or semi-trailer, respectively.

21. Remote control system according to Claim 19 or 20, **characterised in that** when an attempt is made to mate the key codes of two tractor vehicles simultaneously, said transmitter/receiver unit of the trailer or semi-trailer, respectively, declines a new mating operation and issues an error message upon deletion of the mating parameters.

22. Remote control system according to Claim 19 or 20, **characterised in that** when a separate transmitter/receiver unit is provided in the trailer or semi-trailer, respectively, this transmitter/receiver unit signals the double attempt to mate the two tractor vehicles to said transmitter/receiver unit of the tractor vehicle and that thereupon repeated mating attempts are made.

## Revendications

1. Système de télécommande sans fil destiné à la télécommande de fonctions dans des véhicules automobiles, en particulier à la télécommande radio pour une suspension pneumatique commandée par électronique dans des véhicules utilitaires, avec au moins une unité d'émission / de réception (20 ; 23) du côté du véhicule et avec une unité de télécommande (1) qui communique avec l'unité d'émission / de réception et qui envoie au moins des signaux de télécommande,
**caractérisé en ce que** le système de télécommande présente des moyens de transmission (21, 22) destinés à la communication entre l'unité de télécommande (1) et l'unité (les unités) d'émission / de réception (20 ; 23) lorsque l'unité de télécommande (1) fonctionne, que l'unité de télécommande (1) et l'unité d'émission / de réception - au moins au nombre d'une - présentent des moyens de protection contre les pertes (14, 19) qui reconnaissent une interruption de la communication entre l'unité (les unités) de télécommande (1) et l'unité d'émission / de réception (20 ; 23) et que sont associés à l'unité (aux unités) d'émission / de réception (20 ; 23) des moyens d'affichage qui, au moins au début du trajet, affichent la perte de l'unité de télécommande lorsqu'une interruption de la communication est reconnue entre l'unité de télécommande (1) et l'unité d'émission / de réception (20 ; 23) au moins au nombre d'une.

2. Système de télécommande selon la revendication 1 **caractérisé en ce que** les moyens de transmission destinés à la communication bidirectionnelle sont installés entre l'unité de télécommande (1) et l'unité (les unités) d'émission / de réception (20 ; 23).

3. Système de télécommande selon la revendication 1 ou 2 **caractérisé en ce que** la communication par liaison radio entre l'unité de télécommande (1) et l'unité d'émission / de réception (20 ; 23) est réalisée sporadiquement.

4. Système de télécommande selon l'une des revendications 1 à 3 **caractérisé en ce que** l'on prévoit dans le véhicule un support de dépôt destiné à déposer l'unité de télécommande (1) et que l'unité de télécommande (1) présente un détecteur (14) qui reconnaît électroniquement que l'unité de télécommande (1) est déposée correctement dans le support de dépôt.

5. Système de télécommande selon l'une des revendications 1 à 4 **caractérisé en ce que** l'unité de télécommande est installée de telle sorte qu'elle envoie un dernier message d'acquittement à l'unité d'émission / de réception du véhicule de traction lorsque le détecteur (14) a reconnu avant le début du trajet que l'unité de télécommande (1) est déposée correctement dans le support de dépôt et qu'elle interrompt ensuite la liaison avec cette unité d'émission / de réception.

6. Système de télécommande selon la revendication 5 **caractérisé en ce que** l'unité d'émission / de réception (20 ; 23) du véhicule de traction est conçue pour produire sur les moyens d'affichage (25) un affichage d'erreur ou de perte lorsque le dernier message d'acquittement de l'appareil de télécommande (1) manque au début du trajet.

7. Système de télécommande selon la revendication 5 ou 6 **caractérisé en ce que** l'unité de télécommande (1) présente des moyens de déconnexion (17) qui déconnectent leur alimentation électrique après l'envoi du dernier message d'acquittement.

8. Système de télécommande selon l'une des revendications 4 à 7 **caractérisé en ce que** le support de dépôt présente un aimant permanent (19) et le détecteur de l'unité de télécommande (1) un détecteur magnétique (14) ou un commutateur magnétique qui reconnaît l'aimant permanent (19) lorsqu'on introduit l'unité de télécommande (1) dans le support de dépôt et produit un signal de reconnaissance correspondant dans l'unité de télécommande (1).

9. Système de télécommande selon la revendication 8 **caractérisé en ce que** l'unité de télécommande (1) interroge sporadiquement le détecteur magnétique (14) tant qu'elle se trouve en état actif.

10. Système de télécommande selon la revendication 8 ou 9 **caractérisé en ce que** le détecteur magnétique (14) se déconnecte automatiquement après avoir reconnu l'aimant permanent (19) et avoir produit le signal de reconnaissance.

11. Système de télécommande selon l'une des revendications 4 à 10 **caractérisé en ce que** l'unité de télécommande (1) présente des moyens d'activation qui activent l'unité de télécommande (1) après son retrait du support de dépôt.

12. Système de télécommande selon la revendication 11 **caractérisé en ce que** les moyens d'activation présentent sur l'unité de télécommande (1) une touche ou un contact à lames souples qui, pour activer l'unité de télécommande (1), doit être manipulé(e) ou se déclenche automatiquement après qu'on a retiré du support de dépôt l'unité de télécommande (1).

13. Système de télécommande selon l'une des revendications 1 à 12 **caractérisé en ce que** le véhicule de traction présente une première unité d'émission / de réception et qu'une remorque ou une semi-remorque qu'il tire présente une deuxième unité d'émission / de réception.

14. Système de télécommande selon l'une des revendications 2 à 13 **caractérisé en ce que** l'unité de télécommande et chaque unité d'émission / de réception du véhicule de traction et de la remorque ou de la semi-remorque sont en outre conçues pour l'échange bidirectionnel de codes de cryptage spécifiques à l'appareil.

15. Système de télécommande selon la revendication 14 **caractérisé en ce que** les codes de cryptage contiennent au moins le numéro de série de l'unité de télécommande (1).

16. Système de télécommande selon la revendication 14 ou 15 **caractérisé en ce que** les codes de cryptage contiennent aussi un numéro de série de l'unité d'émission / de réception de la remorque ou de la semi-remorque tirée par le véhicule de traction.

17. Système de télécommande selon l'une des revendications 12 à 16 **caractérisé en ce que** les codes de cryptage de l'unité de télécommande (1) et éventuellement du véhicule de traction ainsi que de la remorque ou de la semi-remorque sont associés les uns aux autres de telle manière que l'unité de télécommande (1) et les unités d'émission / de réception du véhicule de traction et de la remorque ou de la semi-remorque tirée ne peuvent être influencés par aucun véhicule ni télécommande étrangers.

18. Système de télécommande selon l'une des revendications 12 à 17 **caractérisé en ce qu'**il est adapté pour modifier l'association des codes de cryptage de l'unité de télécommande (1), de l'unité d'émission / de réception du véhicule de traction et d'une remorque ou d'une semi-remorque qu'il tire.

19. Système de télécommande selon l'une des revendications 14 à 17 **caractérisé en ce que**, après le démarrage du véhicule, l'unité d'émission / de réception du véhicule de traction transmet automatiquement le code de cryptage de l'unité de télécommande à l'unité d'émission / de réception de la remorque ou de la semi-remorque et donc établit un appariement automatique entre l'unité de télécommande (1) et l'unité d'émission / de réception de la remorque ou de la semi-remorque.

20. Système de télécommande selon la revendication 19 **caractérisé en ce que** sur l'unité d'émission / de réception du véhicule de traction et de la remorque s'ouvre une fenêtre de temps dans laquelle l'unité d'émission / de réception de la remorque est prête à un nouvel appariement entre l'unité de télécommande et l'unité d'émission / de réception de la remorque ou de la semi-remorque.

21. Système de télécommande selon la revendication 19 ou 20 **caractérisé en ce que**, lors d'un essai d'appariement simultané des codes de cryptage de deux véhicules de traction, l'unité d'émission / de réception de la remorque ou de la semi-remorque refuse le nouvel appariement et délivre un message d'erreur après l'effacement des paramètres d'appariement.

22. Système de télécommande selon la revendication 19 ou 20 **caractérisé en ce que**, lorsqu'il y a dans la remorque ou dans la semi-remorque une unité d'émission / de réception propre, celle-ci avertit l'unité d'émission / de réception du véhicule de traction qu'elle a effectué un double essai d'appariement des deux véhicules de traction puis tente un nouvel essai d'appariement.
